# FASCICULE DE BREVET EUROPEEN

(11) **EP 2 904 475 B1**
(45) Date de publication et mention de la délivrance du brevet: **16.12.2020**
(21) Numéro de dépôt: 13770937.4
(22) Date de dépôt: 02.10.2013
(51) Int. Cl.: G06F 3/039, G06F 3/046, G06F 3/0354, B43K 29/00, B43K 29/08

(54) **ANNEAU MAGNETIQUE APTE A ETRE FIXE DE FAÇON AMOVIBLE SUR UN CRAYON OU UN EFFACEUR**
VORÜBERGEHEND AN EINEM STIFT ODER RADIERER ANBRINGBARER MAGNETISCHER RING
MAGNETIC RING REMOVABLY ATTACHABLE TO A PENCIL OR ERASER

(30) Priorité: 05.10.2012 FR 1259525
(43) Date de publication de la demande: 12.08.2015
(73) Titulaire: Commissariat à l'Energie Atomique et aux Energies Alternatives, 75015 Paris (FR)
(72) Inventeur: JOBERT, Timothée, F-38000 Grenoble (FR); HAUTSON, Tristan, F-38600 Fontaine (FR); VALLEJO, Jean-Luc, F-38000 Grenoble (FR)
(74) Mandataire: INNOV-GROUP
(86) Numéro de dépôt international: PCT/EP2013/070504
(87) Numéro de publication internationale: WO 2014/053526

(56) Documents cités:
- EP-A1- 0 159 498
- WO-A1-2008/070147
- WO-A2-2005/024620
- FR-A1- 2 586 302
- FR-A1- 2 952 450
- FR-A1- 2 988 862
- FR-A1- 2 988 874
- US-A1- 2011 086 335

## Description

L'invention concerne un anneau magnétique apte à être fixé de façon amovible sur un crayon ou un effaceur ainsi qu'un équipement pour un tel crayon. L'invention a également pour objet un système de relevé de la trace d'un crayon ou d'un effaceur, équipé de cet anneau magnétique.

Les inventeurs connaissent, en interne, des systèmes de relevé de la trace d'un crayon ou d'un effaceur sur un support d'écriture comportant :
- un anneau magnétique apte à être fixé de façon amovible sur le crayon ou l'effaceur,
- un réseau de magnétomètres apte à mesurer le champ magnétique généré par l'anneau magnétique, ce réseau de magnétomètres étant fixé sans aucun degré de liberté à une face d'appui d'une tablette, cette face d'appui constituant le support d'écriture ou supportant le support d'écriture,
- un calculateur apte à déterminer la position et l'orientation de l'anneau magnétique pour en déduire la position de la pointe du crayon ou de l'effaceur par rapport à la face d'appui à partir des mesures du réseau de magnétomètres.

Un tel système est décrit dans les demandes de brevet déposées sous les numéros FR1252881 et FR1252880 le 29 mars 2012 et publiées le 4 octobre 2013 sous les numéros, respectivement, FR2988862 et FR2988874. Ces demandés ne font pas partie de l'état de la technique.

Ce système présente notamment l'avantage, par rapport à d'autres systèmes connus, que le crayon ou l'effaceur a uniquement besoin d'être équipé d'un aimant pour pouvoir fonctionner.

Par crayon, on désigne ici tout ustensile directement manipulable par la main d'un être humain afin de dessiner sur un support physique d'écriture une trace, tel que, par exemple, un stylo ou un pinceau. Typiquement, la trace est visible à l'œil nu soit directement sur le support physique soit sur un écran d'affichage. Pour laisser une trace directement visible sur le support, le crayon dépose un liquide ou un solide coloré pour former la trace directement visible par un être humain sur le support d'écriture. Le liquide coloré est typiquement une encre ou de la peinture. Le solide coloré est par exemple du graphite.

Par effaceur, on désigne ici tout ustensile directement manipulable par la main d'un être humain afin de dessiner sur un support physique d'écriture une trace qui, lorsqu'elle rencontre une trace laissée par le crayon, efface la trace laissée par ce crayon. L'effacement peut être un effacement numérique de donnée d'une trace enregistrée à l'aide d'un crayon ou être un effacement physique de la trace sur le support. Par exemple, l'effacement physique de la trace sur le support peut provenir d'une réaction chimique et/ou d'un effet mécanique comme l'abrasion. Contrairement au crayon, la trace dessinée par l'effaceur n'est généralement pas visible à l'œil nu.

Par « dessiner », on englobe ici le fait de parcourir avec une pointe le support d'écriture pour écrire ou effacer.

Le support d'écriture est une feuille de papier, une toile ou tout autre support sur lequel on peut dessiner.

Pour obtenir une bonne précision dans le relevé de la trace du crayon ou de l'effaceur, celui-ci doit être équipé d'un anneau magnétique présentant un champ magnétique puissant. Cela impose l'utilisation de matériaux magnétiques particuliers qui présentent, généralement, une dureté très élevée. Ainsi, les anneaux magnétiques réalisés dans un tel matériau magnétique présentent un diamètre intérieur prédéfini qui ne peut pas s'adapter à différents crayons ou effaceurs ayant différents diamètres extérieurs. Cela impose donc la réalisation de crayons ou d'effaceurs spécifiques ayant un diamètre extérieur correspondant au diamètre intérieur de l'anneau magnétique.

Toutefois, il est souhaitable de permettre à un utilisateur d'utiliser le système de relevé de trace avec son ou ses crayons ou effaceurs habituels. Ces crayons ou effaceurs habituels présentent une grande diversité de formes et notamment de diamètres extérieurs du corps du crayon ou de l'effaceur. Cette diversité de diamètres extérieurs est incompatible avec la rigidité de l'aimant magnétique qui doit être utilisé dans le système de relevé. Ainsi, les systèmes de relevé actuels ne permettent pas l'utilisation de crayons ou d'effaceurs de différents diamètres extérieurs.

De l'état de la technique est également connu de : EP0159498 A1, WO2008/070147A1, US2011/086335A1, WO2005/024620A1, FR2586302A1 et FR2952450A1.

L'invention vise à remédier à cet inconvénient. Elle a donc pour objet un anneau magnétique conforme à la revendication 1.

Dans l'anneau magnétique ci-dessus, la présence du matériau élastique dans l'anneau permet d'adapter le même anneau à différents diamètres extérieurs de crayons ou d'effaceurs tout en permettant l'utilisation d'un matériau magnétique très rigide.

Les modes de réalisation de cet anneau peuvent comporter une ou plusieurs des caractéristiques des revendications dépendantes.

Ces modes de réalisation de l'anneau magnétique présentent en outre les avantages suivants :
- la présence du matériau élastique entre la couche magnétique et la face intérieure de l'anneau ou entre différents blocs magnétiques disjoints permet de réaliser simplement un anneau magnétique dont le diamètre intérieur peut s'adapter à différents diamètres extérieurs de crayon ;
- l'utilisation d'un anneau dont la longueur est au moins supérieure à son diamètre intérieur permet d'obtenir un bon parallélisme entre l'axe longitudinal du crayon et celui de l'anneau.

L'invention a également pour objet un équipement pour un crayon ou un effaceur conforme à la revendication 9.

L'équipement ci-dessus permet d'utiliser un anneau magnétique dont la longueur est inférieure à son diamètre intérieur tout en garantissant un bon parallélisme entre les axes longitudinaux de cet anneau et du crayon sur lequel il doit être monté.

Enfin, l'invention a également pour objet un système de relevé de la trace d'un crayon ou d'un effaceur sur un support d'écriture conforme à la revendication 10.

L'invention sera mieux comprise à la lecture de la description qui va suivre, donnée uniquement à titre d'exemple non limitatif et faite en se référant aux dessins sur lesquels :
- la figure 1 est une illustration schématique d'un système de relevé de la trace d'un crayon ;
- la figure 2 est une illustration schématique d'un réseau de magnétomètres utilisé dans le système de la figure 1 ;
- la figure 3 est une illustration schématique, en vue de côté, d'un premier mode de réalisation d'un anneau magnétique utilisé dans le système de la figure 1 ;
- la figure 4 est une illustration schématique, en coupe transversale, de l'anneau de la figure 3 ;
- la figure 5 est un organigramme d'un procédé de relevé de la trace d'un crayon à l'aide du système de la figure 1 ;
- les figures 6 et 7 sont des illustrations schématiques d'un second mode de réalisation d'un anneau magnétique susceptible d'être utilisé dans le système de la figure 1 ;
- les figures 8 et 9 sont des illustrations schématiques d'un troisième mode de réalisation d'un anneau magnétique susceptible d'être utilisé dans le système de la figure 1 ;
- la figure 10 est une illustration schématique en coupe longitudinale d'un équipement pour un crayon susceptible d'être utilisé dans le système de la figure 1 ;
- la figure 11 est une illustration schématique en vue de côté d'une mâchoire de l'équipement de la figure 10 ;
- la figure 12 est une illustration schématique de différentes positions de calibration du système de la figure 1 avec un crayon.

Dans ces figures, les mêmes références sont utilisées pour désigner les mêmes éléments.

Dans la suite de cette description, les caractéristiques et fonctions bien connues de l'homme du métier ne sont pas décrites en détails.

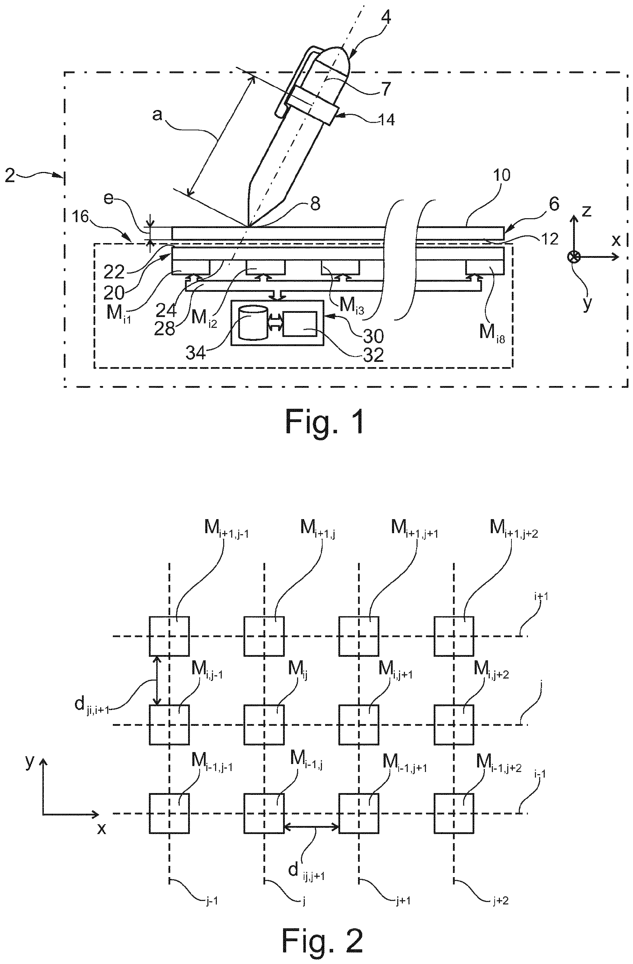

La figure 1 représente un système 2 de relevé de la trace de la pointe d'un crayon 4 sur un support d'écriture 6.

Le crayon 4 est librement déplaçable directement par la main d'un être humain dans un repère XYZ fixé sans aucun degré de liberté au système 2. Ici, les directions X et Y de ce repère sont horizontales et la direction Z est verticale. Par la suite, les termes « au-dessus », « en dessous », « supérieur », « inférieur » sont relatifs à cette direction verticale Z.

Le crayon 4 pèse typiquement moins de 1 kg et, de préférence, moins de 200g ou 100g. Les dimensions de ce crayon sont également suffisamment réduites pour qu'il soit tenu à l'aide d'une seule main par un être humain. Le crayon 4 présente une forme oblongue. Il s'étend le long d'un axe longitudinal 7.

Par exemple, ce crayon 4 est entièrement réalisé dans des matériaux non magnétiques, c'est-à-dire des matériaux ne présentant aucune propriété magnétique mesurable par le système 2.

Le crayon 4 est un crayon conventionnel que l'on peut librement acheter dans le commerce. Le diamètre extérieur du corps du crayon 4 est donc généralement compris entre 1,5 mm et 3 cm. Ici, il est choisi dans le groupe composé d'un stylo à bille, d'un stylo à encre, d'un stylo à plume, d'un feutre, d'un crayon bois, d'un marqueur, d'un surligneur, d'un calame, d'une plume, d'un pinceau. Dans ce mode de réalisation, à titre d'illustration, le crayon 4 est un stylo à bille.

Le crayon 4 présente une pointe 8 qui dépose un liquide ou un solide coloré sur une face supérieure 10 du support d'écriture 6. A cet effet, par exemple, le crayon 4 est pourvu d'un réservoir de liquide coloré tel qu'une cartouche. Le liquide coloré peut être de l'encre. La pointe 8 est située sur l'axe 7 à l'extrémité inférieure du crayon 4. Dans ce mode de réalisation, la pointe 8 présente une symétrie de révolution autour de l'axe 7. Ainsi, la position angulaire de la pointe 8 autour de l'axe 7 ne modifie pas la largeur ou la forme de la trace laissée par cette pointe 8 sur le support 6.

Par exemple, le support 6 est un support d'écriture conventionnel présentant une épaisseur e non nulle dans la direction Z. Ici, l'épaisseur e est supposée constante sur toute la face 10. L'épaisseur e peut être quelconque. En particulier, cette épaisseur e peut être très petite, c'est-à-dire inférieure à 1 mm ou à 0,5 mm dans le cas d'une feuille de papier ou d'une toile. L'épaisseur e peut aussi être très grande, c'est-à-dire supérieure à 5 mm dans le cas d'un cahier ou d'un bloc note.

Le support 6 peut être rigide ou souple. Par exemple, un support rigide est une plaque de verre ou de métal non sensible magnétiquement. Un support souple est une feuille de papier.

La surface de la face 10 est suffisamment grande pour permettre d'écrire ou de dessiner. A cet effet, elle est typiquement supérieure à 6 ou 20 ou à 100 cm².

Le support 6 présente également une face inférieure 12 du côté opposé à la face 10.

Le système 2 comporte un anneau magnétique 14 et un appareil 16 de localisation de la pointe 8 dans le repère XYZ à partir de la position et de l'orientation mesurées de l'anneau 14. Sur la figure 1, les traits ondulés verticaux indiquent qu'une partie de l'appareil 16 n'a pas été représentée.

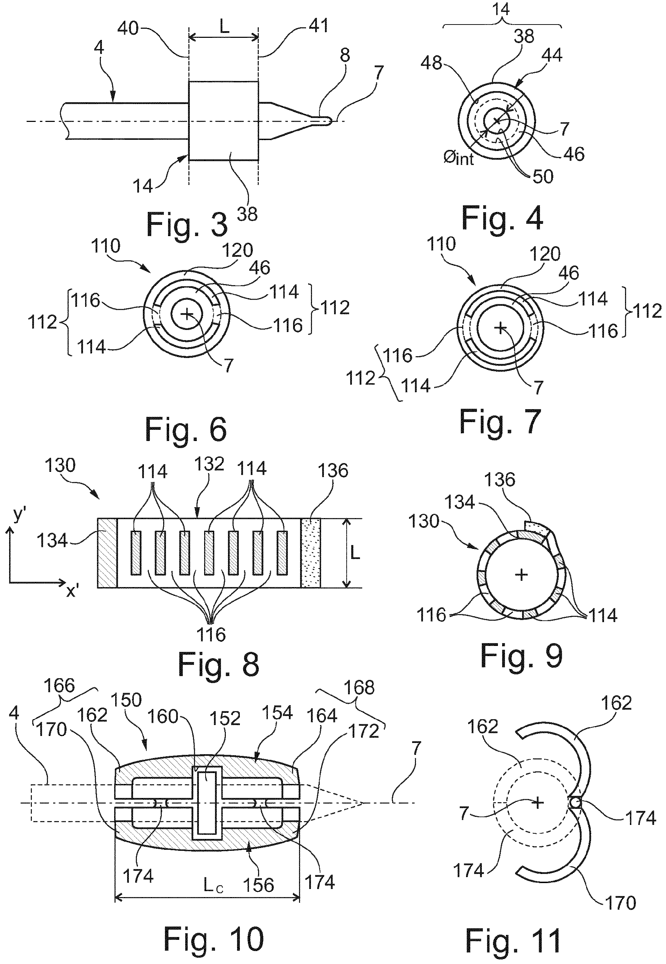

L'anneau 14 est fixé sur la périphérie extérieur du corps du crayon 4. Typiquement, il entoure le corps rigide en matériau non magnétique du crayon 4. L'anneau 14 est décrit plus en détail en référence à la figure 3.

La distance la plus courte qui sépare la pointe 8 de la projection orthogonale du centre de gravité de l'anneau 14 sur l'axe 7 est ici notée « a ».

L'appareil 16 comprend une tablette 20 présentant une face avant 22 d'appui et une face arrière 24. Cette tablette est typiquement dépourvue de circuit électrique ou électronique. Elle est par exemple réalisée d'un seul bloc de matière.

La face 22 s'étend horizontalement. La face inférieure 12 du support 6 est directement déposée sur la face 22. La surface de la face 22 est suffisamment grande pour permettre d'écrire ou de dessiner. Typiquement, elle est supérieure à 20 ou 100 cm².

La tablette 20 est réalisée dans un matériau non magnétique. Par exemple, le module de Young de la tablette 20 est supérieur à 2 ou 10 ou 50 GPa à 25°C. De plus, son épaisseur est suffisante pour ne pas se plier sous la pression exercée par la main de l'utilisateur lorsque celui-ci écrit à l'aide du crayon 4 sur le support 6. Par exemple, la tablette 20 est une plaque de verre dont l'épaisseur est supérieure à 1 mm ou 4 mm.

L'appareil 16 comporte un réseau de N magnétomètres tri-axes Mᵢⱼ. Ce réseau permet de localiser l'anneau 14 dans le repère XYZ. Par localisation, on entend ici la détermination de la position x, y, z de l'anneau 14 dans le repère XYZ et aussi la détermination de l'orientation de l'anneau 14 par rapport aux directions X, Y et Z du repère XYZ. Par exemple, l'orientation de l'anneau 14 est représentée par les angles θₓ, θ_{y} et θ_{z} du moment magnétique de l'anneau 14, respectivement, par rapport aux axes X, Y et Z du repère.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur la face arrière 24 de la tablette 20.

Chaque magnétomètre Mᵢⱼ mesure la direction et l'intensité du champ magnétique généré par l'anneau 14. Pour cela, chaque magnétomètre Mᵢⱼ mesure la norme de la projection orthogonale du champ magnétique généré par l'anneau 14 au niveau de ce magnétomètre Mᵢⱼ sur trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux directions X, Y et Z du repère. La sensibilité du magnétomètre Mᵢⱼ est par exemple inférieure à 10⁻⁶T ou 10⁻⁷T.

Chaque magnétomètre Mᵢⱼ est raccordé par l'intermédiaire d'un bus 28 de transmission d'informations à une unité de traitement 30.

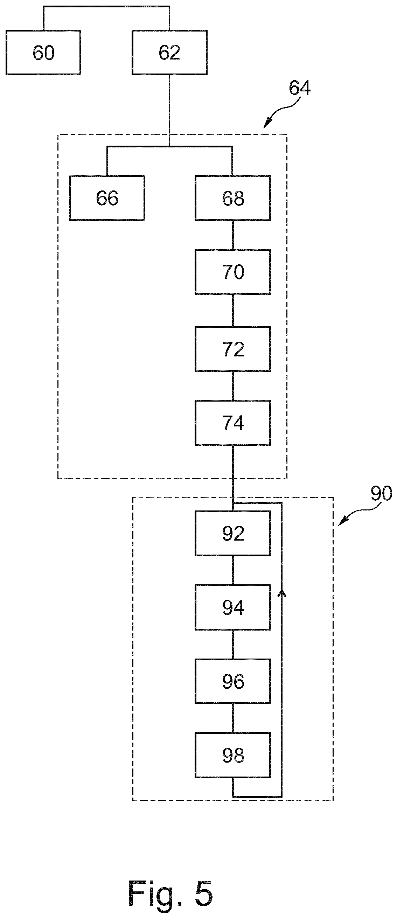

L'unité de traitement 30 est capable de déterminer la position de la pointe 8 sur le support 6 à partir de la position et de l'orientation mesurées de l'anneau 14 dans le repère XYZ par les magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 5. En particulier, l'unité 30 implémente un modèle mathématique associant chaque mesure d'un magnétomètre Mᵢⱼ à la position et à l'orientation de l'anneau 14 dans le repère XYZ. Ce modèle est implémenté sous la forme d'un filtre de Kalman étendu. Ce modèle est typiquement construit à partir des équations physiques de l'électromagnétisme. Pour construire ce modèle, l'anneau 14 est approximé par un dipôle magnétique. Cette approximation n'introduit que très peu d'erreurs si la distance entre l'anneau 14 et le magnétomètre Mᵢⱼ est supérieure à 2L et, de préférence, supérieure à 3L, où L est la plus grande dimension de l'anneau 14. Typiquement, L est inférieur à 7cm et, de préférence, inférieur à 4 ou 2cm.

L'unité 30 est également capable d'acquérir et d'enregistrer la trace laissée par la pointe 8 sur le support 6 à partir des différentes positions déterminées pour cette pointe.

La figure 2 représente une partie des magnétomètres Mᵢⱼ de l'appareil 16. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance d_{i,j},ⱼ₊₁. De façon similaire, le centre de deux magnétomètres Mᵢⱼ et M_{i+1,,j} immédiatement consécutifs le long d'une même colonne j sont séparés par une distance d_{j,i},ᵢ₊₁.

Ici, quelle que soit la ligne i, la distance d_{i,j},ⱼ₊₁ est la même. Cette distance est donc notée dⱼ. De façon similaire, quelle que soit la colonne j, la distance d_{j,i},ᵢ₊₁ entre deux magnétomètres est la même. Cette distance est donc notée dᵢ.

Dans ce mode de réalisation particulier, les distances dᵢ et dⱼ sont toutes les deux égales à d.

Typiquement, la distance d est comprise entre 1 et 4 cm lorsque :
- la puissance de l'aimant permanent est de 0,5 A.m²,
- la sensibilité des magnétomètres est de 4^{∗}10⁻⁷T, et
- le nombre de magnétomètres Mᵢⱼ est de soixante-quatre.

La figure 3 représente plus en détail l'anneau 14. L'anneau 14 présente un moment magnétique global parallèle à l'axe 7. Dans ce mode de réalisation, le moment magnétique de l'anneau 14 est confondu ou coaxial avec l'axe 7. Cet anneau 14 présente une face extérieure 38 cylindrique de section transversale circulaire. La génératrice de cette face extérieure cylindrique est confondue avec l'axe 7. Les extrémités de l'anneau 14 se terminent dans des plans 40, 41 d'extrémités perpendiculaires chacun à l'axe 7. La longueur L de l'anneau 14 est donc dans ce mode de réalisation la distance la plus courte entre les plans 40 et 41. Cette longueur L est de préférence supérieure au diamètre intérieur Φᵢₙₜ de l'anneau 14 et, de préférence, deux fois supérieure à Φᵢₙₜ. De préférence, la longueur L de cet anneau est inférieure à 15 cm, ou inférieur à 10cm, voire à 7 cm ou 5 cm.

La figure 4 représente la section transversale de l'anneau 14. Cet anneau 14 comporte une couche extérieure 44 en matériau magnétique et une couche intérieure 46 en matériau élastique. Les couches 44 et 46 s'étendent sur toute la longueur L de l'anneau 14.

La couche 44 est uniquement réalisée par un matériau magnétique uniformément réparti autour de l'axe 7. Ce matériau magnétique forme un aimant permanent annulaire dont la direction du moment magnétique est confondue avec l'axe 7. La face extérieure de la couche 44 correspond à la face extérieure 38. Cette couche 44 comporte également une face interne 48 tournée vers l'axe 7. L'épaisseur e44 de la couche 44 est définie comme étant la distance la plus courte entre les faces 38 et 48. Par exemple, l'épaisseur e44 est supérieure à 0,5 ou 1 mm et, généralement, inférieure à 1 cm ou 5 mm. Ici, l'épaisseur e44 est constante.

Le matériau magnétique qui compose cette couche 44 est un matériau ferromagnétique ou ferrimagnétique. Ce matériau présente un moment magnétique non nul même en absence de champ magnétique extérieur. Par exemple, ce matériau présente un champ magnétique coercitif supérieur à 100 A.m⁻¹ ou 500 A.m⁻¹. La puissance de cet aimant permanent est typiquement supérieure à 0,01 A.m² ou 0,1 A.m².

A cet effet, la couche 44 est réalisée dans un matériau magnétique rigide. Ici, par rigide, on désigne un matériau dont le module de Young à 25° C est supérieur à 15 ou 30 ou 50 GPa. Dans ces conditions, la couche 44 ne peut pas s'adapter à différents diamètres de crayon.

Dans ce mode de réalisation, pour remédier à cet inconvénient, la couche 46 recouvre la face interne 48. Cette couche 46 présente une face intérieure cylindrique 50 dont la génératrice est confondue avec l'axe 7. Cette face 50 est destinée à venir en appui direct sur le corps du crayon 4. La section transversale de la face 50 est circulaire. Cette couche 46 est déformable élastiquement lors de l'introduction du crayon 4 à l'intérieur de l'anneau 14 entre une position de repos, représentée en trait plein sur la figure 4, et une position déformée, représentée en pointillés sur la figure 4. La position de repos correspond à une valeur du diamètre intérieur Φᵢₙₜ comprise entre 1,5 mm et 3 cm et, de préférence, entre 5 mm et 1,5 cm. La position déformée correspond à une valeur supérieure du diamètre intérieur Φᵢₙₜ égal au diamètre extérieur du corps du crayon 4. L'écart entre ces deux valeurs, noté ΔΦ, est typiquement supérieur à 1 mm ou 2 mm.

Pour cela, la couche 46 est uniformément réalisée dans un matériau élastique dont le module de Young à 25° C est inférieur ou égal à 1 GPa et, de préférence, inférieur ou égal à 0,1 ou 0,01 GPa. Par exemple, le matériau élastique est un matériau élastomère ou du latex ou un matériau à mémoire de forme.

L'épaisseur de la couche 46 dans la direction radiale est strictement supérieure à ΔΦ. Par exemple, cette épaisseur est supérieure à 2 ou 4 mm.

Le fonctionnement du système 2 va maintenant être décrit en référence au procédé de la figure 5.

Lors d'une étape 60, l'appareil 16 mesure en permanence la position et l'orientation de l'anneau 14 dans le repère XYZ lié sans aucun degré de liberté à la face avant 22. Pour simplifier, on suppose ici que les directions X et Y de ce repère sont contenues dans le plan de la face avant 22. Par conséquent, la hauteur, notée h₀, de l'anneau 14 par rapport à la face 22 est égale à la valeur de la coordonnée z de l'anneau 14 dans le repère XYZ.

En parallèle, lors d'une étape 62, l'utilisateur fixe l'anneau 14 sur le crayon 4. Par exemple, pour cela, il introduit la point 8 au centre de l'anneau 14 puis fait coulisser le crayon 4 à l'intérieur de l'anneau 14. Sous l'effet de cette action, le crayon 4 écrase la couche élastique 46 et la repousse vers sa position déformée. Ceci augmente le diamètre intérieur de l'anneau 14 sans déformer le matériau magnétique. Une fois que l'anneau 14 a été positionné sur l'extrémité du corps du crayon 4 la plus proche de la pointe 8, la couche élastique exerce sur le corps du crayon 4 une force de rappel qui maintient l'anneau 14 en place tant que le crayon 4 est utilisé.

Après avoir positionné l'anneau 14 sur le crayon 4, l'utilisateur déclenche une phase 64 de calibration.

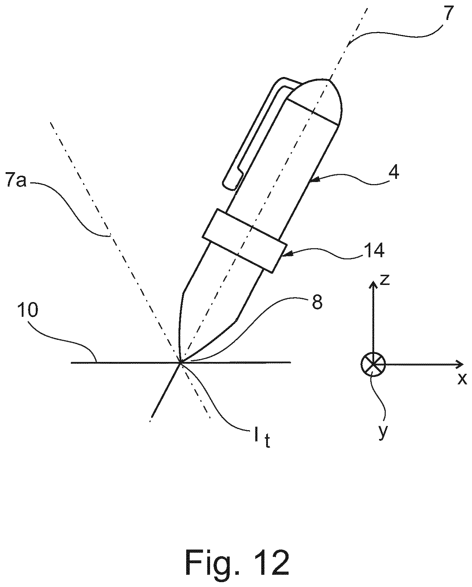

Au début de cette phase, lors d'une étape 66, l'utilisateur maintient la pointe 8 du crayon 4 en contact avec la face 10 puis déplace l'extrémité opposée du crayon 4 pour modifier son inclinaison par rapport au support 6 sans modifier la position de la pointe 8 sur ce support 6. La figure 12 représente deux positions du stylo 4 obtenues lors de l'étape 66. Sur cette figure, l'axe 7 correspond à une première inclinaison tandis que l'axe 7a correspond à une deuxième inclinaison du stylo 4. Pour simplifier la figure 12, seul l'axe 7a a été représenté pour la seconde inclinaison.

En parallèle, lors d'une étape 68, le calculateur 32 relève la position et l'orientation de l'anneau 14 mesurées par le réseau de magnétomètres. Ainsi, le calculateur 14 relève un faisceau d'orientations qui pointent toutes vers le point de contact entre la pointe 8 et la face 10 du support 6. Sur la figure 12, ce point de contact porte la référence Iₜ.

Dans la suite de cette description, le calcul de la valeur d'un seuil S_{cp} de contact et de la distance « a » est illustré dans le cas des première et seconde inclinaisons représentées sur la figure 12. Toutefois, ce qui est décrit ci-dessous peut aisément être généralisé au cas de plus de deux inclinaisons du crayon 4.

Le seuil S_{cp} permet de détecter le contact de la pointe 8 avec le support 6. En effet, on considère qu'il existe un point de contact entre la pointe 8 et le support 6 si la hauteur hₚ de la pointe 8 par rapport à la face 22 est inférieure ou égale au seuil S_{cp}. Ce seuil S_{cp} est fonction de l'épaisseur e du support 6.

Lors d'une étape 70, l'unité 30 calcule le point d'intersection Iₜ entre les axes 7 et 7a. De préférence, pour cela, l'unité 30 calcule les coordonnées du point du repère XYZ qui minimisent l'écart entre les axes 7 et 7a. La hauteur du point d'intersection Iₜ par rapport à la face 22 permet d'obtenir une estimation de l'épaisseur e du support 6.

Ensuite, lors d'une étape 72, la valeur du seuil S_{cp} est calculée à partir de cette estimation de l'épaisseur e. Par exemple, la valeur du seuil S_{cp} est choisie égale à cette estimation plus une marge d'erreur ε. La marge d'erreur ε est déterminée expérimentalement. Par exemple, ε est ici choisi inférieur ou égal à 1mm ou 0,5mm ou 0,1mm ou 0,05 mm ou 0,0025mm.

Enfin, lors d'une étape 74, la distance « a » est calculée. Par exemple, l'unité 30 calcule la distance « a » en fonction de la position et de l'orientation relevées lors de l'étape 68. En effet, puisque la pointe 8 est en contact avec la face 10, la distance « a » correspond à la distance qui sépare l'anneau 14 de la face 10 dans la direction de son moment magnétique. Par exemple, la distance « a » est calculée à l'aide de la relation suivante : h₀ = a^{∗}cos θ + e, où :
- h₀ est la hauteur de l'anneau 14 par rapport à la face 22 ;
- θ est l'angle entre le moment magnétique de l'anneau 14 et la direction verticale Z, et
- « e » est l'estimation de l'épaisseur du support 6 obtenue lors de l'étape 70.

L'angle θ et la valeur de la hauteur h₀ sont déduits des relevés réalisés lors de l'étape 68. Une fois la distance « a » calculée, on dit qu'elle est « connue ». Elle est enregistrée dans la mémoire 34.

Une fois que le seuil S_{cp} et la distance « a » ont été configurés, l'unité 30 procède à une phase 90 de relevé de la trace laissée par le crayon 4 sur la face 10 du support 6.

Pour cela, lors d'une étape 92, l'unité 30 calcule la position de la pointe 8 dans le repère XYZ à partir de la position et de l'orientation mesurée de l'anneau 14 lors de l'étape 60 et de la distance connue « a ». De plus, la position de la pointe au moment où celle-ci est en contact avec la face 10 est égale à la position du point de contact. Par exemple, la position de la pointe 8 est égale à la position de l'anneau 14 décalée de la distance « a » dans la direction du moment magnétique de l'anneau 14. Ainsi, la hauteur hₚ est calculée à l'aide de la relation suivante : hₚ = h₀ - a^{∗}cos θ, où θ est l'angle entre le moment magnétique de l'anneau 14 et la direction verticale Z. L'angle θ et la valeur de la hauteur h₀ sont mesurés lors de l'étape 60. Les coordonnées de la position de la pointe 8 dans le repère XYZ sont ici notées xₚ, yₚ et zₚ. Ici, la coordonnée zₚ est égale à la hauteur hₚ..

Lors d'une étape 94, l'unité 30 détecte le point de contact entre la pointe 8 et la face 10. Pour cela, l'unité 30 compare la hauteur hₚ au seuil S_{cp}. Un point de contact est détecté uniquement lorsque la hauteur hₚ est inférieure au seuil S_{cp}.

Ensuite, à chaque fois qu'un point de contact est détecté, lors d'une étape 96, l'unité 30 relève les coordonnées xₚ et yₚ au moment où se produit ce point de contact.

Lors d'une étape 98, l'unité 30 enregistre, par exemple dans la mémoire 34, la position calculée pour la pointe 8 lorsque celle-ci est en contact avec le support 6.

Les étapes 92 à 98 sont réitérées en boucle.

L'enregistrement successif de la position de la pointe 8 sur la face 10 constitue le relevé de la trace laissée par la pointe 8 sur ce support 6. Par exemple, ici, chaque position de la pointe 8 lorsqu'elle est en contact avec le support 6 est enregistrée par ordre chronologique. A l'inverse, les positions de la pointe 8 lorsque celle-ci n'est pas en contact avec le support 6 sont enregistrées comme ne faisant pas partie de la trace laissée sur le support 6.

Les figures 6 et 7 représentent un anneau 110 utilisable dans le système 2 à la place de l'anneau 14. Cet anneau 110 est identique à l'anneau 14 sauf que la couche 44 est remplacée par une couche magnétique 112. Cette couche 112 est identique à la couche 44, sauf que le matériau magnétique n'est pas continûment réparti autour de l'axe 7. Ici, la couche 112 comporte N blocs 114 de matériaux magnétiques rigides mécaniquement séparés les uns des autres par des segments 116 en matériau élastique, où N est un nombre entier strictement supérieur à deux. Pour simplifier les figures 6 et 7, N est pris égal à deux. Dans ce mode de réalisation, les blocs 114 sont tous identiques les uns aux autres et uniformément répartis sur la périphérie de la couche 46.

Par exemple, le matériau magnétique des blocs 114 est le même que celui utilisé pour réaliser la couche 44. Le matériau élastique utilisé pour réaliser les segments 116 est par exemple le même que celui utilisé pour la couche 46.

De plus, dans ce mode de réalisation, la couche 112 est recouverte d'une couche 120 en matériau élastique. Le matériau de la couche 120 est, par exemple, identique à celui de la couche 46.

La figure 6 représente le matériau élastique des segments 116 et des couches 46 et 120 dans sa position de repos et la figure 7 représente ce même matériau élastique dans sa position déformée.

Lors de l'insertion de l'anneau 110 sur le crayon 4, les segments 116 s'élargissent de manière à permettre aux différents blocs 114 de s'écarter les uns des autres. Cela permet de fixer l'anneau 110 sur des crayons de différents diamètres sans déformer les blocs 114 en matériau magnétique.

Les figures 8 et 9 représentent un anneau 130 susceptible d'être utilisé dans le système 2. Plus précisément, l'anneau 130 est identique à l'anneau 110, sauf que les couches 44 et 120 sont omises et que l'anneau 130 est déplaçable, de façon réversible, directement par la main de l'utilisateur, entre une position ouverte représentée sur la figure 8 et une position fermée représentée sur la figure 9. Sur les figures 8 et 9, le nombre N de blocs 114 est pris égal à sept.

Dans la position ouverte, l'anneau 130 forme une bande 132 s'étendant essentiellement dans un plan X'Y' où X' et Y' sont des directions orthogonales, la direction Y' étant parallèle à l'axe 7. Dans la position fermée, la bande 132 est enroulée sur la périphérie du corps du crayon 4 pour former un anneau magnétique fermé.

La bande 132 comporte deux extrémités opposées, 134 et 136, dans la direction X'. Dans la position ouverte, ces extrémités sont séparées l'une de l'autre par une distance strictement supérieure au diamètre extérieur du corps du crayon 4. Dans la position fermée, ces extrémités 134, 136 sont superposées l'une sur l'autre.

Ici, les extrémités 134 et 136 sont équipées d'un mécanisme de verrouillage apte à verrouiller l'anneau 130 dans sa position fermée et, en alternance, à autoriser le déplacement de l'anneau 130 vers sa position ouverte. Par exemple, ce mécanisme de verrouillage consiste en des parties respectives de bandes auto-agrippantes fixées chacune sur les extrémités 134 et 136. Cette bande auto-agrippante est également plus connue sous le nom de VELCRO@ ou « bande Velcro® ».

En fonction du diamètre du crayon 4, les segments 116 s'élargissent, ce qui permet d'allonger la bande 132 lorsqu'elle est enroulée autour du corps du crayon 4 de manière à ce que les extrémités 134 et 136 se rejoignent dans la position fermée.

La figure 10 représente un équipement 150 pour le crayon 4. Cet équipement 150 comporte un anneau magnétique 152 et deux coques rigides 154 et 156. Les coques 154, 156 sont destinée à maintenir la direction du moment magnétique de l'anneau 152 parallèle à l'axe 7.

Ici, l'anneau 152 est par exemple identique à l'anneau 14 sauf que sa longueur L est inférieure à la valeur de son diamètre Φᵢₙₜ dans sa position de repos.

La coque 154 comprend un logement 160 apte à coincer, sans aucun degré de liberté, une partie de l'anneau 152. Pour rendre ce logement plus visible, sur la figure 10, un jeu est représenté entre ce logement 160 et l'anneau 152. Dans la réalité, ce jeu n'existe pas ou est strictement inférieur à 100 ou 10 ou 5 µm.

Les extrémités de la coque 154, opposés dans la direction parallèle à l'axe 7, sont équipées chacune d'une première partie, respectivement 162, 164, de mâchoires 166, 168.

Par exemple, les coques 154 et 156 sont symétriques l'une de l'autre par rapport à un plan de symétrie contenant l'axe 7. Ainsi, la coque 156 se déduit par symétrie de la coque 154. Toutefois, dans la coque 156, les références numériques 162 et 164 ont été remplacées par des références numériques 170 et 172.

La coque 156 est mécaniquement raccordée à la coque 154 par une charnière 174 dont l'axe de rotation est parallèle à l'axe 7.

Les mâchoires 166 et 168 sont séparées l'une de l'autre dans une direction parallèle à l'axe 7 par une distance L_{c} strictement supérieure à la valeur du diamètre Φᵢₙₜ dans la position de repos et, de préférence, deux ou trois fois supérieure à cette valeur. La distance L_{c} est par exemple égale à la longueur L de l'anneau 14.

La mâchoire 166 est déplaçable entre une position ouverte, représentée sur la figure 11 en trait plein, et une position fermée représentée sur la figure 11 en pointillé.

Dans la position fermée, la mâchoire 166 enserre le corps du crayon 4. Dans la position ouverte, la mâchoire 166 libère le corps du crayon 4 de sorte que ce crayon 4 peut être retiré des mâchoires 166 et 168. La mâchoire 166 passe, de façon réversible, entre la position fermée et la position ouverte en pivotant autour de l'axe de la charnière 174.

Par exemple, la mâchoire 168 est identique à la mâchoire 166 sauf qu'elle est située du côté opposé de la coque.

Les coques sont également équipées d'un moyen de verrouillage des mâchoires 166 et 168 dans leur position fermée.

Les coques 154 et 156 permettent donc de stabiliser l'anneau 152 dans une position où la direction de son moment magnétique est confondue avec l'axe 7 lorsque les mâchoires 166 et 168 sont dans leur position fermée.

De préférence, la face extérieure des coques 154 et 156 recouvre l'anneau 152 et forme un moyen de préhension du crayon 4 pendant qu'un utilisateur écrit avec ce crayon 4.

De nombreux autres modes de réalisation sont possibles. Par exemple, le matériau magnétique n'est pas un aimant permanent mais est réalisé dans un matériau paramagnétique, diamagnétique ou un matériau ferromagnétique doux.

La section de l'anneau n'est pas nécessairement une section circulaire. Dans ce cas on désigne par « diamètre intérieur », le diamètre hydraulique intérieur. En fait, la section transversale de l'anneau peut être quelconque à partir du moment où celle-ci présente un centre dans un plan perpendiculaire à l'axe 7 situé sur l'axe longitudinal. Par exemple, la section transversale de la face intérieure peut également être carrée, ovale ou rectangulaire.

En variante, le moment magnétique global de l'anneau est parallèle à l'axe 7 mais n'est pas confondu avec cet axe. Pour cela, la quantité de matériau magnétique n'est pas uniformément répartie autour de l'axe 7. Par exemple, les blocs 114 situés d'un côté d'un plan contenant l'axe 7 présente des moments magnétiques plus forts que ceux situés de l'autre côté de ce même plan. Dans une autre variante, la répartition du matériau magnétique dans la couche 44 est modifiée de manière à obtenir un anneau ayant un moment magnétique parallèle avec l'axe 7 mais pas confondu avec cet axe.

L'épaisseur de la couche 46 n'est pas nécessairement constante le long de la périphérie de la face 48. Par exemple, la face intérieure 50 présente des creux et des bosses de plus de 0,5 mm de hauteur dans la position de repos pour accroître le coefficient de friction entre le crayon 4 et l'anneau 14.

D'autres modes de réalisation du mécanisme de verrouillage de l'anneau 130 sont possibles. Par exemple, les bandes auto-agrippantes peuvent être remplacées par des colles présentant une faible adhérence telles que celles utilisées pour la réalisation de papillons adhésifs plus connus sous le terme anglais de « Post-it ».

L'anneau n'est pas nécessairement fermé. Par exemple, l'anneau 14 est scié sur un seul de ses côtés parallèlement à l'axe 7.

Tout ce qui a précédemment était décrit dans le cas particulier d'un crayon s'applique également au cas d'un effaceur.

L'équipement 150 peut être utilisé avec des anneaux magnétiques dépourvus de matériau élastique déformable entre :
- une position de repos correspondant à une première valeur du diamètre intérieur de l'anneau, et
- une position déformée correspondant à une seconde valeur du diamètre intérieur de l'anneau, l'écart entre les première et seconde valeurs du diamètre intérieur étant supérieur ou égal à 1 mm. L'étendue de l'invention est définie par les revendications annexées.

## Revendications

1. Système de relevé de la trace d'un crayon (4) ou d'un effaceur sur un support d'écriture comportant :
- un anneau magnétique (14 ; 110 ; 130 ; 152) apte à être fixé sur le crayon (4) ou l'effaceur, cet anneau comportant :
- une face intérieure (50) cylindrique centrée sur l'axe longitudinal et une face extérieure (38) opposée à la face intérieure,
- un matériau magnétique réparti dans une couche (44 ; 112), appelée « couche magnétique », autour de l'axe longitudinal de manière à ce que la direction du moment magnétique global de l'anneau magnétique soit parallèle avec l'axe longitudinal,
- une face d'appui d'une tablette (20), cette face d'appui constituant le support d'écriture ou supportant le support d'écriture,
**caractérisé en ce que** :
- l'anneau magnétique (14 ; 110 ; 130 ; 152) est apte à être fixé de façon amovible sur le crayon (4) ou l'effaceur,
- le plus petit diamètre intérieur de l'anneau est compris entre 1,5 mm et 3 cm,
- l'anneau comporte un matériau élastique (46 ; 116), distinct du matériau magnétique, déformable élastiquement entre :
• une position de repos correspondant à une première valeur du diamètre intérieur de l'anneau, et
• une position déformée correspondant à une seconde valeur du diamètre intérieur de l'anneau, l'écart entre les première et seconde valeurs du diamètre intérieur étant supérieur ou égal à 1 mm, ce matériau élastique présentant un module de Young à 25° C inférieur ou égal à 1 GPa,
- le système comporte :
• un réseau de magnétomètres apte à mesurer le champ magnétique généré par l'anneau magnétique, ce réseau de magnétomètres étant fixé sans aucun degré de liberté à la face d'appui de la tablette (20),
• un calculateur (32) apte à déterminer la position et l'orientation de l'anneau magnétique pour en déduire la position de la pointe du crayon (4) ou de l'effaceur par rapport à la face d'appui à partir des mesures du réseau de magnétomètres.

2. Anneau magnétique adapté pour être mis en œuvre dans un système conforme à la revendication 1, cet anneau magnétique étant apte à être fixé sur un crayon (4) ou un effaceur, cet anneau comportant :
- une face intérieure (50) cylindrique centrée sur l'axe longitudinal et une face extérieure (38) opposée à la face intérieure,
- un matériau magnétique réparti dans une couche (44 ; 112), appelée « couche magnétique », autour de l'axe longitudinal de manière à ce que la direction du moment magnétique global de l'anneau magnétique soit parallèle avec l'axe longitudinal,
**caractérisé en ce que** :
- l'anneau magnétique est apte à être fixé de façon amovible sur le crayon (4) ou l'effaceur,
- le plus petit diamètre intérieur de l'anneau est compris entre 1,5 mm et 3 cm,
- l'anneau comporte un matériau élastique (46 ; 116), distinct du matériau magnétique, déformable élastiquement entre :
• une position de repos correspondant à une première valeur du diamètre intérieur de l'anneau, et
• une position déformée correspondant à une seconde valeur du diamètre intérieur de l'anneau, l'écart entre les première et seconde valeurs du diamètre intérieur étant supérieur ou égal à 1 mm, ce matériau élastique présentant un module de Young à 25° C inférieur ou égal à 1 GPa.

3. Anneau adapté pour être mis en œuvre dans un système conforme à la revendication 1 ou anneau selon la revendication 2, dans lequel :
- à l'intérieur de la couche magnétique (44), le matériau magnétique s'étend continûment autour de l'axe longitudinal sur un secteur angulaire, perpendiculaire à cet axe longitudinal et dont le sommet est situé sur l'axe longitudinal, strictement supérieur à 180° ou 220°, et
- le matériau élastique est réparti entre la couche magnétique et la face intérieure de l'anneau de manière à former une couche élastique (46) dont l'épaisseur, dans une direction perpendiculaire à l'axe longitudinal, est supérieure à 1 mm.

4. Anneau adapté pour être mis en œuvre dans un système conforme à la revendication 1 ou anneau selon la revendication 2, dans lequel, à l'intérieur de la couche magnétique (112), le matériau magnétique est réparti en plusieurs blocs (114) disjoints les uns des autres et le matériau élastique est logé entre ces blocs.

5. Anneau adapté pour être mis en œuvre dans un système conforme à la revendication 1 ou anneau selon l'une quelconque des revendications 2 à 4, dans lequel l'anneau comporte deux extrémités (134, 136) et l'anneau est déformable, de façon réversible par un être humain, entre :
- une position ouverte dans laquelle les deux extrémités sont espacées l'une de l'autre par une distance supérieure à la première valeur du diamètre intérieur de l'anneau de manière à ouvrir l'anneau, et
- une position fermée dans laquelle les deux extrémités sont mécaniquement raccordées l'une à l'autre pour fermer l'anneau.

6. Anneau selon la revendication 5, dans lequel l'anneau comporte un mécanisme de verrouillage apte se déplacer entre :
- un position verrouillée dans laquelle ce mécanisme maintient l'anneau dans sa position fermée, et
- une position déverrouillée dans laquelle le mécanisme autorise le déplacement de l'anneau vers sa position ouverte.

7. Anneau selon la revendication 6, dans lequel le mécanisme de verrouillage comporte une bande auto-agrippante.

8. Anneau adapté pour être mis en œuvre dans un système conforme à la revendication 1 ou anneau selon l'une quelconque des revendications 2 à 7, dans lequel la longueur de l'anneau parallèlement à l'axe longitudinal est au moins supérieure à la plus grande valeur possible du diamètre intérieur de cet anneau.

9. Anneau adapté pour être mis en œuvre dans un système conforme à la revendication 1 ou anneau selon l'une quelconque des revendications 2 à 8, dans lequel le matériau magnétique présente un module de Young à 25° C supérieur à 20 GPa.

10. Équipement pour un crayon (4) ou un effaceur, cet équipement comportant :
- un anneau magnétique (152) comprenant une face intérieure cylindrique centrée sur une axe longitudinal,
- au moins une coque rigide (154, 156) comportant un logement (160) conformé pour recevoir l'anneau magnétique et maintenir l'axe longitudinal de l'anneau magnétique reçu dans ce logement parallèle à un axe longitudinal du crayon (4) ou de l'effaceur lorsque cette coque est fixée sans aucun degré de liberté sur ce crayon (4) ou cet effaceur,
- une première et une seconde mâchoires (166, 168), chaque mâchoire comportant une première et une seconde parties (162, 164, 170, 172) déplaçables entre :
• une position fermée dans laquelle les première et seconde parties sont aptes à enserrer le crayon (4) ou l'effaceur pour fixer la coque sur ce crayon (4) ou cet effaceur, et
• une position ouverte dans laquelle les première et seconde parties libèrent le crayon (4) ou l'effaceur, les première et seconde mâchoires étant fixées sans aucun degré de liberté à ladite au moins une coque et espacées l'une de l'autre dans une direction parallèle à l'axe longitudinal de l'anneau magnétique par une distance au moins deux fois supérieure à la plus grande valeur possible du diamètre intérieur de l'anneau magnétique,
**caractérisé en ce que** l'anneau magnétique est conforme à l'une quelconque des revendications 2 à 9.

## Patentansprüche

1. System für die Erfassung der Bahn eines Stifts (4) oder eines Radierers auf einer Schreibunterlage, das Folgendes umfasst:
- einen magnetischen Ring (14; 110; 130; 152), der an dem Stift (4) oder dem Radierer befestigt werden kann, wobei dieser Ring Folgendes umfasst:
- eine zylindrische Innenfläche (50), die auf die Längsachse zentriert ist, und eine Außenfläche (38) gegenüber der Innenfläche,
- ein magnetisches Material, das in einer Schicht (44; 112), die "magnetische Schicht" genannt wird, um die Längsachse in der Weise verteilt ist, dass die Richtung des globalen magnetischen Moments des magnetischen Rings zu der Längsachse parallel ist,
- eine Abstützfläche einer Platte (20), wobei diese Abstützfläche die Schreibunterlage bildet oder die Schreibunterlage trägt,
**dadurch gekennzeichnet, dass**:
- der magnetische Ring (14; 110; 130; 152) an dem Stift (4) oder dem Radierer abnehmbar befestigt werden kann,
- der kleinste Innendurchmesser des Rings im Bereich von 1,5 mm bis 3 cm liegt und
- der Ring ein elastisches Material (46; 116) aufweist, das von dem magnetischen Material verschieden ist und elastisch verformbar ist zwischen:
• einer Ruheposition, die einem ersten Wert des Innendurchmessers des Rings entspricht, und
• einer verformten Position, die einem zweiten Wert des Innendurchmessers des Rings entspricht, wobei der Abstand zwischen dem ersten und dem zweiten Wert des Innendurchmessers größer oder gleich 1 mm ist, wobei dieses elastische Material einen Elastizitätsmodul bei 25 °C, der kleiner oder gleich 1 GPa ist, aufweist,
- wobei das System Folgendes umfasst:
• ein Magnetometernetz, das das Magnetfeld, das durch den magnetischen Ring erzeugt wird, messen kann, wobei dieses Magnetometernetz ohne jeden Freiheitsgrad an der Abstützfläche der Platte (20) befestigt ist,
• einen Rechner (32), der die Position und die Orientierung des magnetischen Rings bestimmen kann, um daraus die Position der Spitze des Stifts (4) oder des Radierers in Bezug auf die Abstützfläche anhand von Messungen des Magnetometernetzes abzuleiten.

2. Magnetischer Ring, der dafür ausgelegt ist, in einem System nach Anspruch 1 betrieben zu werden, wobei dieser magnetische Ring an einem Stift (4) oder an einem Radierer befestigt werden kann, wobei dieser Ring Folgendes umfasst:
- eine zylindrische Innenfläche (50), die auf die Längsachse zentriert ist, und eine Außenfläche (38) gegenüber der Innenfläche,
- ein magnetisches Material, das in einer Schicht (44; 112), die "magnetische Schicht" genannt wird, um die Längsachse in der Weise verteilt ist, dass die Richtung des globalen magnetischen Moments des magnetischen Rings zu der Längsachse parallel ist,
**dadurch gekennzeichnet, dass**:
- der magnetische Ring an dem Stift (4) oder dem Radierer abnehmbar befestigt werden kann,
- der kleinste Innendurchmesser des Rings im Bereich von 1,5 mm bis 3 cm liegt,
- der Ring ein elastisches Material (46; 116) enthält, das von dem magnetischen Material verschieden ist und elastisch verformbar ist zwischen:
• einer Ruheposition, die einem ersten Wert des Innendurchmessers des Rings entspricht, und
• einer verformten Position, die einem zweiten Wert des Innendurchmessers des Rings entspricht, wobei der Abstand zwischen dem ersten und dem zweiten Wert des Innendurchmessers größer oder gleich 1 mm ist, wobei dieses elastische Material einen Elastizitätsmodul bei 25 °C, der kleiner oder gleich 1 GPa ist, aufweist.

3. Ring, der dafür ausgelegt ist, in einem System nach Anspruch 1 oder einem Ring nach Anspruch 2 betrieben zu werden, wobei:
- der magnetische Ring sich innerhalb der magnetischen Schicht (44) um die Längsachse ununterbrochen über einen Winkelsektor senkrecht zu dieser Längsachse, dessen Scheitel auf der Längsachse liegt, der streng größer als 180° oder 220° ist, erstreckt und
- das elastische Material zwischen der magnetischen Schicht und der Innenfläche des Rings in der Weise verteilt ist, dass eine elastische Schicht (46) gebildet wird, deren Dicke in einer Richtung senkrecht zu der Längsachse größer als 1 mm ist.

4. Ring, der dafür ausgelegt ist, in einem System nach Anspruch 1 oder einem Ring nach Anspruch 2 betrieben zu werden, wobei innerhalb der magnetischen Schicht (112) das magnetische Material in mehreren nicht miteinander verbundenen Blöcken (114) verteilt ist und das elastische Material sich zwischen diesen Blöcken befindet.

5. Ring, der dafür ausgelegt ist, in einem System nach Anspruch 1 oder einem Ring nach einem der Ansprüche 2 bis 4 betrieben zu werden, wobei der Ring zwei Enden (134, 136) aufweist und auf eine durch einen Menschen umkehrbare Weise verformbar ist zwischen:
- einer offenen Position, in der die beiden Enden voneinander um eine Strecke beabstandet sind, die größer als der erste Wert des Innendurchmessers des Rings ist, derart, dass der Ring geöffnet ist, und
- einer geschlossenen Position, in der die beiden Enden mechanisch miteinander verbunden sind, derart, dass der Ring geschlossen ist.

6. Ring nach Anspruch 5, wobei der Ring einen Verriegelungsmechanismus enthält, der sich verlagern kann zwischen:
- einer verriegelten Position, in der dieser Mechanismus den Ring in seiner geschlossenen Position hält, und
- einer entriegelten Position, in der der Mechanismus die Verlagerung des Rings in seine offene Position zulässt.

7. Ring nach Anspruch 6, wobei der Verriegelungsmechanismus ein Klettband enthält.

8. Ring, der dafür ausgelegt ist, in einem System nach Anspruch 1 oder einem Ring nach einem der Ansprüche 2 bis 7 betrieben zu werden, wobei die Länge des Rings parallel zu der Längsachse zumindest größer als der größtmögliche Wert des Innendurchmessers dieses Rings ist.

9. Ring, der dafür ausgelegt ist, in einem System nach Anspruch 1 oder einem Ring nach einem der Ansprüche 2 bis 8 betrieben zu werden, wobei das magnetische Material einen Elastizitätsmodul bei 25 °C, der größer als 20 GPa ist, aufweist.

10. Ausrüstung für einen Stift (4) oder einen Radierer, wobei diese Ausrüstung Folgendes umfasst:
- einen magnetischen Ring (152), der eine zylindrische Innenfläche, die auf eine Längsachse zentriert ist, besitzt,
- wenigstens eine starre Schale (154, 156), die einen Aufnahmeraum (160) aufweist, der so geformt ist, dass er den magnetischen Ring aufnehmen kann und die Längsachse des magnetischen Rings, der in diesem Aufnahmeraum aufgenommen ist, parallel zu einer Längsachse des Stifts (4) oder des Radierers halten kann, wenn diese Schale ohne jeden Freiheitsgrad an diesem Stift (4) oder diesem Radierer befestigt ist,
- eine erste und eine zweite Klemmbacke (166, 168), wobei jede Klemmbacke einen ersten und einen zweiten Teil (162, 164, 170, 172) aufweist, die verlagerbar sind zwischen:
• einer geschlossenen Position, in der der erste und der zweite Teil den Stift (4) oder den Radierer umschließen können, um die Schale an diesem Stift (4) oder diesem Radierer zu befestigen, und
• einer offenen Position, in der der erste und der zweite Teil den Stift (4) oder den Radierer freigeben, wobei die erste und die zweite Klemmbacke ohne jeden Freiheitsgrad an der wenigstens einen Schale befestigt sind und in einer Richtung parallel zu der Längsachse des magnetischen Rings um eine Strecke beabstandet sind, die wenigstens zweimal größer als der größtmögliche Wert des Innendurchmessers des magnetischen Rings ist,
**dadurch gekennzeichnet, dass** der magnetische Ring wie in einem der Ansprüche 2 bis 9 beschaffen ist.

## Claims

1. System for indicating the trace of a pencil (4) or of an eraser on a writing medium comprising:
- a magnetic ring (14; 110; 130; 152) that can be fixed to the pencil (4) or the eraser, this ring comprising:
- a cylindrical inner face (50) centred on the longitudinal axis and an outer face (38) opposite the inner face,
- a magnetic material distributed in a layer (44; 112), called "magnetic layer", about the longitudinal axis so that the direction of the overall magnetic moment of the magnetic ring is parallel with the longitudinal axis,
- a bearing face of a tablet (20), this bearing face constituting the writing medium or supporting the writing medium,
**characterized in that**:
- the magnetic ring (14; 110; 130; 152) can be fixed removably to the pencil (4) or the eraser,
- the smallest inner diameter of the ring is between 1.5 mm and 3 cm,
- the ring comprises an elastic material (46; 116), distinct from the magnetic material, that is elastically deformable between:
• a rest position corresponding to a first value of the inner diameter of the ring, and
• a deformed position corresponding to a second value of the inner diameter of the ring, the difference between the first and second values of the inner diameter being greater than or equal to 1 mm, this elastic material exhibiting a Young's modulus at 25°C less than or equal to 1 GPa,
- the system comprises:
• an array of magnetometers that can measure the magnetic field generated by the magnetic ring, this array of magnetometers being fixed with no degree of freedom to the bearing face of the tablet (20),
• a computer (32) that can determine the position and the orientation of the magnetic ring to deduce therefrom the position of the point of the pencil (4) or of the eraser with respect to the bearing face from the measurements of the array of magnetometers.

2. Magnetic ring suitable for implementation in a system according to Claim 1, this magnetic ring being able to be fixed to a pencil (4) or an eraser, this ring comprising:
- a cylindrical inner face (50) centred on the longitudinal axis and an outer face (38) opposite the inner face,
- a magnetic material distributed in a layer (44; 112), called "magnetic layer", about the longitudinal axis so that the direction of the overall magnetic moment of the magnetic ring is parallel with the longitudinal axis,
**characterized in that**:
- the magnetic ring can be fixed removably to the pencil (4) or the eraser,
- the smallest inner diameter of the ring is between 1.5 mm and 3 cm,
- the ring comprises an elastic material (46; 116), distinct from the magnetic material, that is elastically deformable between:
• a rest position corresponding to a first value of the inner diameter of the ring, and
• a deformed position corresponding to a second value of the inner diameter of the ring, the difference between the first and second values of the inner diameter being greater than or equal to 1 mm, this elastic material exhibiting a Young's modulus at 25°C less than or equal to 1 GPa.

3. Ring suitable for implementation in a system according to Claim 1 or ring according to Claim 2, wherein:
- inside the magnetic layer (44), the magnetic material extends continually about the longitudinal axis over an annular segment, at right angles to this longitudinal axis and whose vertex is situated on the longitudinal axis, strictly greater than 180° or 220°, and
- the elastic material is distributed between the magnetic layer and the inner face of the ring so as to form an elastic layer (46) whose thickness, in a direction at right angles to the longitudinal axis, is greater than 1 mm.

4. Ring suitable for implementation in a system according to Claim 1 or ring according to Claim 2, wherein, inside the magnetic layer (112), the magnetic material is distributed in a number of blocks (114) separated from one another and the elastic material is housed between these blocks.

5. Ring suitable for implementation in a system according to Claim 1 or ring according to any one of Claims 2 to 4, wherein the ring comprises two ends (134, 136) and the ring is deformable, reversibly by a human being, between:
- an open position in which the two ends are spaced apart from one another by a distance greater than the first value of the inner diameter of the ring so as to open the ring, and
- a closed position in which the two ends are mechanically connected to one another to close the ring.

6. Ring according to Claim 5, wherein the ring comprises a locking mechanism that can be displaced between:
- a locked position in which this mechanism keeps the ring in its closed position, and
- an unlocked position in which the mechanism allows the displacement of the ring to its open position.

7. Ring according to Claim 6, wherein the locking mechanism comprises a self-gripping strip.

8. Ring suitable for implementation in a system according to Claim 1 or ring according to any one of Claims 2 to 7, wherein the length of the ring parallel to the longitudinal axis is at least greater than the greatest possible value of the inner diameter of this ring.

9. Ring suitable for implementation in a system according to Claim 1 or ring according to any one of Claims 2 to 8, wherein the magnetic material exhibits a Young's modulus at 25°C greater than 20 GPa.

10. Equipment for a pencil (4) or an eraser, this equipment comprising:
- a magnetic ring (152) comprising a cylindrical inner face centred on a longitudinal axis,
- at least one rigid shell (154, 156) comprising housing (160) conformed to receive the magnetic ring and keep the longitudinal axis of the magnetic ring received in this housing parallel to a longitudinal axis of the pencil (4) or of the eraser when this shell is fixed with no degree of freedom to this pencil (4) or this eraser,
- a first and a second jaws (166, 168), each jaw comprising a first and a second parts (162, 164, 170, 172) that can be displaced between:
• a closed position in which the first and second parts can grip the pencil (4) or the eraser to fix the shell to this pencil (4) or this eraser, and
• an open position in which the first and second parts free the pencil (4) or the eraser, the first and second jaws being fixed with no degree of freedom to said at least one shell and spaced apart from one another in a direction parallel to the longitudinal axis of the magnetic ring by a distance at least two times greater than the greatest possible value of the inner diameter of the magnetic ring,
**characterized in that** the magnetic ring is in accordance with any one of Claims 2 to 9.
